# EUROPEAN PATENT SPECIFICATION

(11) **EP 3 056 258 B1**
(45) Date of publication and mention of the grant of the patent: **15.07.2020**
(21) Application number: 14851976.2
(22) Date of filing: 06.10.2014
(51) Int. Cl.: B01D 65/06, B01D 65/02, B01D 61/58, B01D 61/02

(54) **CHEMICAL CLEANING METHOD FOR MEMBRANE SYSTEMS**
CHEMISCHES REINIGUNGSVERFAHREN FÜR MEMBRANSYSTEME
PROCÉDÉ DE NETTOYAGE CHIMIQUE POUR SYSTÈMES DE MEMBRANE

(30) Priority: 08.10.2013 KR 20130119860
(43) Date of publication of application: 17.08.2016
(73) Proprietor: Coway EnTech Co., Ltd., Seoul 02799 (KR)
(72) Inventor: PARK, Yong Min, Seoul 151-919 (KR); LEE, Ju Youn, Seoul 151-919 (KR); KWON, Oh Sung, Seoul 151-919 (KR)
(74) Representative: Modiano, Micaela Nadia
(86) International application number: PCT/KR2014/009392
(87) International publication number: WO 2015/053519

(56) References cited:
- WO-A1-2007/147198
- WO-A1-2013/094428
- GB-A- 2 430 196
- JP-A- H07 313 850
- JP-A- 2006 082 027
- JP-A- 2011 212 540
- JP-A- 2013 126 635
- KR-B1- 101 050 418

## Description

### TECHNICAL FIELD

The present invention relates to a chemical cleaning method for a RO/NF membrane system, the chemical cleaning method restoring and maintaining the filtration performance of a membrane by predicting a membrane foulant and using a chemical cleaning agent appropriate for the foulant to chemically clean a reverse osmosis membrane and a nanofiltration membrane.

### BACKGROUND ART

A membrane is a film that can separate a mixture by selectively allowing a particular substance to pass therethrough. The membrane is a porous membrane having numerous pores which are at least several nanometers (nm). The membrane may separate organic foulants, inorganic foulants, parasites, bacteria, or the like, contained in water.

The membrane is classified as a microfiltration membrane (MF), an ultrafiltration membrane (UF), a nanofiltration membrane (NF), a reverse osmosis membrane (RO), and the like, according to the size of the pores. Water treatment using the membrane has advantages in that, compared to other filtration systems, the usage of a chemical such as a coagulant is lower and the required site area may be reduced.

The membrane is capable of using a small amount of energy for solid-liquid separation but has a limitation in that membrane fouling reduces the performance of the membrane. In the fouling phenomenon, a suspended matter contained in the water or a material having a property of being easily adsorbed on a membrane surface may accumulate on the surface of and in openings of the membrane to impede the flow of a fluid and thereby reduce the permeability.

Since the fouling is a decrease in the membrane performance caused by foulants rather than a degradation of the membrane itself, the performance may be restored through cleaning. When the fouling occurs, the permeation flux is reduced. The fouling is composed of an adsorbed layer, a gel layer, a scale, an adsorption layer, and the like. In the adsorbed layer is a cake which is sedimented or deposited on the membrane surface, or a layer formed by the scale and the adsorbed material.

A cake layer is a layer formed when a suspended matter such as a fine particle, a microorganism, or a colloidal material in a raw solution is accumulated on the membrane surface. The gel layer is a non-fluid layer of a gel phase which is formed on the membrane surface when a solvent such as a soluble polymer is concentrated such that the concentration at the membrane surface is increased. The scale is a layer which is preciptated on the membrane surface when a poorly soluble material such as SiO₂ or CaSO₄ is concentrated beyond the solubility limit. The adsorption layer is a layer formed when a material included in the raw solution is adsorbed on the membrane surface in a particular manner. For example, the adsorption layer is a layer formed through electrostatic adsorption of a suspended matter, a soluble polymer, a surfactant, or the like which is charged, on a film having the opposite charge; hydrophobic adsorption of a hydrophobic material, such as an antifoaming agent or an oil droplet, or a hydrophobic film; or the like.

Cleaning methods that restore the flux in the microfiltration membrane or the ultrafiltration membrane include physical methods and chemical methods. Physical methods include air scrubbing, flushing, and reverse filtration. In air scrubbing, the movement of air is used to remove the suspended matter from the membrane surface, in flushing, raw water is used to remove the suspended matter from the membrane surface, and in reverse filtration, filtered water or compressed air is supplied in the opposite direction to a supply direction to remove the suspended matter.

Air scrubbing and reverse filtration (AS & RF) is a typical physical cleaning method for the microfiltration membrane and the ultrafiltration membrane. The method is a method for removing foreign substances by performing a normal filtration and then, at a predetermined cycle for a predetermined duration of time, allowing filtered water to flow in the opposite direction to the normal filtration at a higher rate than the normal filtration rate, while at the same time introducing compressed air to forcefully shake the membrane. The method is performed for a duration of about 5 to 150 seconds for every 10 to 60 minutes of the normal filtration. The cleaning cycle of the method is realized in an intermittently continuous manner.

In the chemical cleaning method, the foulant adsorbed on the membrane is chemically dissolved using a cleaning solution. The chemical cleaning includes an acid cleaning for removing an inorganic foulant, a base cleaning for removing an organic foulant, or a cleaning which uses an enzyme or a disinfectant. The cleaning agent may be selected and used according to the material causing the fouling. For example, an oxidizing agent (sodium hypochlorite (NaOCl), hydrogen peroxide (H₂O₂), ozone (O₃)) is used when the membrane fouling is due to an organic material or a microorganism. A surfactant (various ionic or non-ionic surfactants, an emulsifier) is used when the fouling is due to fat or mineral oil, an acid (nitric acid (HNO₃), phosphoric acid (H₂PO₄), hydrochloric acid (HCl), sulfuric acid (H₂SO₄), citric acid, oxalic acid) is used when the fouling is due to a calcium scale or a metallic material, and an alkali (sodium hydroxide (NaOH), potassium hydroxide (KOH), ammonium hydroxide (NH₄OH), sodium carbonate (Na₂CO₃)) is used when the fouling is due to a silica scale or a humic substance.

A typical chemical cleaning method is cleaning in place (CIP). The method is used when the difference in pressure between membranes reaches a limit. The method is a commonly used chemical circulation type. The method commonly consumes 4 to 24 hours, and rinsing also takes a long time. The method is performed according to the pressure difference formed due to the foulants, requires highly concentrated alkali and acid solutions, and uses a comparatively large amount of chemicals.

There are numerous types of membrane fouling foreign substances, including a suspended particle, a colloid, an organic material, a microorganism, an inorganic salt such as a calcium salt, and the like. Thus, it is difficult to predict in advance the membrane fouling caused by the various foulants.

Typically, the silt density index (SDI) measurement method is often used as a method for predicting in advance the membrane fouling phenomenon in a reverse osmosis process or a nanofiltration process. The SDI is used as a measure for indicating the probability of the fouling occurring on the membrane. A filter having a mesh size of 0.45 µm is used to measure the degree of fouling caused by a suspended solid (SS) component, and the measurement is performed while water flows through a 47 mm diameter filter at a pressure of 30 psid. Here, the time (T0) it takes for the first 500 mL of water to flow is measured, and then after 15 minutes (T) have passed, the time (T1) it takes for 500 mL of water to flow is measured again. The ratio of the two times is used as the criterion.

Such an SDI measurement is currently the most widely used method for predicting the membrane fouling tendency of inflowing water in a reverse osmosis process or a nanofiltration process. Typically, the fouling is not severe when the SDI is below 3, but may be considered to be severe when above 5. However, the SDI measurement may only be used to predict the level of the membrane fouling.

Moreover, in a currently used operating method for chemical cleaning, it is typical to perform each of the acid cleaning and the alkali cleaning without regard for the type of the foulant. Therefore, since the specific foulant is unclear, a large amount of time is consumed in the cleaning.

Therefore, rather than the SDI, a chemical cleaning method that can increase the cleaning efficiency by predicting the foulant which appears in the actual process and using the chemical cleaning agent appropriate for the foulant to chemically clean the membrane system is needed.

For example, Korean Patent Publication No. 10-2010-0116847 relates to an intelligent cleaning apparatus for high efficiency membrane maintenance and a method thereof, and discloses a method and an apparatus for cleaning a membrane by analyzing the water quality of raw water to measure the total algae population, and changing a chemical according to the total algae population.

WO2013/094428 discloses a method for cleaning a reverse osmosis system comprising the measurement of the transmembrane pressure.

### DISCLOSURE OF THE INVENTION

### TECHNICAL PROBLEM

In order to overcome the above-described limitation, an object of the present invention is to provide a chemical cleaning method for an RO/NF membrane system consisting of two arrays, the chemical cleaning being capable of increasing the cleaning efficiency by predicting a membrane foulant and using a chemical cleaning agent appropriate for the foulant to chemically clean a reverse osmosis membrane and a nanofiltration membrane. The method is as defined in the claims.

### TECHNICAL SOLUTION

In order to overcome the above limitations, the present invention provides a method for using a chemical cleaning agent to chemically clean a RO/NF membrane system consisting of two arrays including a first reverse osmosis membrane module array or a first nanofiltration membrane module array that treats a raw water, which is introduced by a high-pressure pump, to divide the raw water into a first produced water and a first concentrated water, and a second reverse osmosis membrane module array or a second nanofiltration membrane module array that treats the first concentrated water to divide the first concentrated water into a second produced water and a second concentrated water, the chemical cleaning method including measuring ΔP1, which is the difference in pressure between the pressure of the raw water introduced to the first reverse osmosis membrane module array or the first nanofiltration membrane module array and the pressure of the first concentrated water introduced to the second reverse osmosis membrane module array or the second nanofiltration membrane module array, and ΔP2, which is the difference in pressure between the pressure of the first concentrated water introduced to the second reverse osmosis membrane module array or the second nanofiltration membrane module array and the pressure of the second concentrated water discharged from the second reverse osmosis membrane module array or the second nanofiltration membrane module array; comparing ΔP1 and ΔP2 and selecting an alkaline chemical cleaning agent as the chemical cleaning agent when ΔP1 is larger than ΔP2, or selecting an acidic chemical cleaning agent as the chemical cleaning agent when ΔP2 is larger than ΔP1, and using the selected chemical agent to chemically clean the reverse osmosis membrane module or the nanofiltration membrane module,
wherein when the first membrane module array is a reverse osmosis membrane module array, the second membrane module array is a nanofiltration membrane module array; and when the first membrane module array is a nanofiltration membrane module array, the second membrane module array is a reverse osmosis membrane module array.

### ADVANTAGEOUS EFFECTS

According to the present invention, in a membrane filtration process, membrane fouling occurs due to a variety of causes, and here, the cleaning efficiency may be increased by predicting a membrane foulant and performing a chemical cleaning using a chemical cleaning agent appropriate for the foulant. Consequently, a long chemical cleaning cycle may be achieved such that time, chemical costs, and the like, which are consumed in the chemical cleaning may be reduced.

### BRIEF DESCRIPTION OF THE DRAWINGS

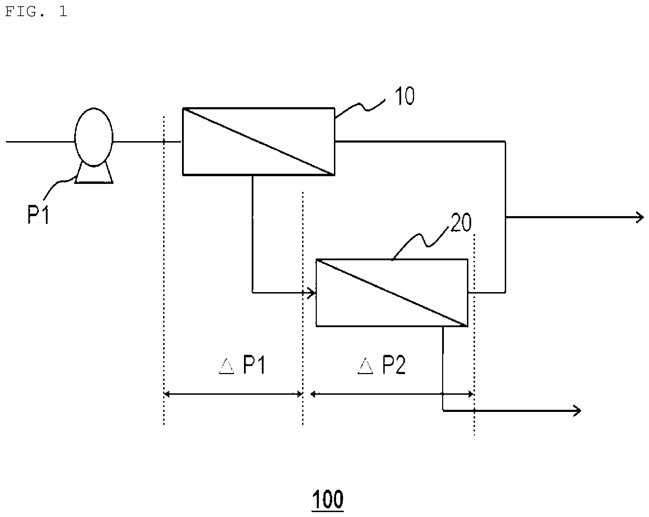

FIG. 1 is a block diagram schematically illustrating a RO/NF membrane system consisting of two arrays, according to an embodiment of the present invention.

### MODE FOR CARRYING OUT THE INVENTION

Hereinafter, a detailed description is given with reference to the accompanying drawing of an embodiment of the present invention, such that the present invention may be easily carried out by a person with ordinary skill in the art.

FIG. 1 is a block diagram schematically illustrating a RO/NF membrane system consisting of two arrays, according to an embodiment of the present invention.

Referring to FIG. 1, a RO/NF membrane system 100 consisting of two arrays according to an embodiment of the present invention may be used in a water treatment apparatus for purification treatment of industrial wastewater, or the like; desalinating seawater; or preparing deionized water in pharmaceuticals production, or the like.

For example, the water treatment apparatus essentially includes a high-pressure pump P1, a first reverse osmosis membrane module array 10, and a second nanofiltration membrane module array 20. For convenience, the reverse osmosis membrane module and the nanofiltration membrane module are respectively illustrated for the first array 10 and the second array 20, but the nanofiltration membrane module and the reverse osmosis membrane module, may be respectively used for the first array 10 and the second array 20.

The high-pressure pump P1 is for supplying raw water, which is subject to treatment, at a high pressure to enable the raw water to pass through the reverse osmosis membrane. Here, the raw water introduced to the first reverse osmosis membrane module array 10 may, when necessary, undergo a pretreatment process.

Here, ions may be removed from the raw water which is supplied to the first reverse osmosis membrane module array 10 to divide the raw water into a first produced water and a first concentrated water. An organic polymer selected from the group consisting of cellulose acetate, polysulfonate, and polyamide may be used as a material in the reverse osmosis membrane. Moreover, as the reverse osmosis membrane module, a tubular type, a spiral wound type, a hollow fiber membrane type, a flat sheet type, or the like, may be used.

Ions which are unable to pass through the first reverse osmosis membrane module array 10 are concentrated in the remaining portion of an inflowing water to be separated into the first concentrated water and introduced to the second nanofiltration membrane module array 20.

Here, in the second nanofiltration membrane module array 20, a divalent cation that causes a scale and an anion that undergoes a precipitation reaction with the cation, which are contained in the first concentrated water, are selectively removed and divided into a second produced water and a second concentrated water.

The first produced water and the second produced water from which foreign substances were thus removed may be stored in a produced water tank (not shown), and the second concentrated water may be discharged to the outside.

The above described first reverse osmosis membrane module array 10 and second nanofiltration membrane module array 20 are composed of a known membrane module for purification treatment of the various types of raw water described above. Thus, the present specification excludes a more detailed description of the configuration.

As such, when a filtration process in which the raw water continuously passes through the first reverse osmosis membrane module array 10 and the second nanofiltration membrane module array 20 is performed, membrane fouling proceeds as foulant contained in the raw water is adsorbed on the surface of the membrane. As such membrane fouling proceeds, the permeation flow rate is reduced and the pressure difference increases. Accordingly, in order to maintain a stable production rate in the membrane filtration process, long-term operation is realized through chemical cleaning.

A chemical cleaning method for the RO/NF membrane system 100 consisting of two arrays according to an embodiment of the present invention is configured such that the filtration performance of the membrane module may be maintained and restored by predicting the membrane foulant and using an appropriate chemical cleaning agent.

For this, the chemical cleaning method for the RO/NF membrane system according to an embodiment of the present invention uses the pressure difference between stages for the first reverse osmosis membrane module array 10 and the second nanofiltration membrane module array 20.

Thus, the foulant is predicted by using the pressure difference of the first reverse osmosis membrane module array 10 stage, that is, ΔP1, which is the difference in pressure between the pressure of the raw water flowing into the first reverse osmosis membrane module array and the pressure of the first concentrated water flowing into the second nanofiltration membrane module array; and the pressure difference of the second nanofiltration membrane module array 20 stage, that is, ΔP2, which is the difference in pressure between the pressure of the first concentrated water flowing into the second nanofiltration membrane module array 20 and the pressure of the second concentrated water discharged from the second nanofiltration membrane module array 20. Here, the pressure of the raw water, the first concentrated water, and the second concentrated water may be measured using a known pressure sensor.

The chemical cleaning agent is selected by comparing ΔP1 and ΔP2 which are measured in such a manner.

When ΔP1 is greater than ΔP2, the foulant is predicted to be a cake layer fouling which frequently occurs in the first reverse osmosis membrane module array 10 due to an organic, insoluble material such as a microorganism, a colloid particle, or the like. Accordingly, an alkaline chemical cleaning agent is selected as the cleaning agent for the chemical cleaning. Here, one selected from the group consisting of sodium hydroxide (NaOH), potassium hydroxide (KOH), ammonium hydroxide (NH₄OH), and sodium carbonate (Na₂CO₃) may be used as the alkaline chemical cleaning agent.

Conversely, when ΔP2 is greater than ΔP1, the foulant is predicted to be a scaling layer fouling which frequently occurs in the second nanofiltration membrane module array 20 due to an inorganic material which is oversaturated through concentration. Accordingly, an acidic chemical cleaning agent is selected as the chemical cleaning agent for the chemical cleaning. Here, one selected from the group consisting of nitric acid (HNO₃), phosphoric acid (H₂PO₄), hydrochloric acid (HCl), sulfuric acid (H₂SO₄), citric acid, and oxalic acid may be used as the acidic chemical cleaning agent.

The chemical cleaning agent selected in such a manner is used to clean the first reverse osmosis membrane module array and the second nanofiltration membrane module array.

Here, for the chemical cleaning, the membrane module may be immersed in a chemical solution in which the chemical cleaning agent is dissolved, or the chemical cleaning solution may be circulated inside of the membrane module. The above-described chemical cleaning method for the membrane module is a widely known technique in the art, and thus the present specification excludes a more detailed description thereof.

As such, the cleaning efficiency may be improved by using the value of the pressure difference between stages to predict the foulant that causes the membrane fouling, and selecting the appropriate chemical cleaning agent to perform the chemical cleaning.

Consequently, a long cleaning cycle may be achieved such that in the chemical cleaning, the time and cost consumed may be reduced and the production efficiency may be increased.

Exemplary embodiments of the present invention have been described above, but the present invention is not limited thereto and may be embodied as various modified forms within the scope of the claims.

## Claims

1. A method for using a chemical cleaning agent to chemically clean a RO/NF membrane system consisting of two arrays including a first reverse osmosis membrane module array or a first nanofiltration membrane module array that treats a raw water, which is introduced by a high-pressure pump, to divide the raw water into a first produced water and a first concentrated water, and a second reverse osmosis membrane module array or a second nanofiltration membrane module array that treats the first concentrated water to divide the first concentrated water into a second produced water and a second concentrated water, the method comprising:
measuring ΔP1, which is the difference in pressure between the pressure of the raw water introduced to the first reverse osmosis membrane module array or the first nanofiltration membrane module array and the pressure of the first concentrated water introduced to the second reverse osmosis membrane module array or the second nanofiltration membrane module array, and ΔP2, which is the difference in pressure between the pressure of the first concentrated water introduced to the second reverse osmosis membrane module array or the second nanofiltration membrane module array and the pressure of the second concentrated water discharged from the second reverse osmosis membrane module array or the second nanofiltration membrane module array;
comparing ΔP1 and ΔP2 and
selecting an alkaline chemical cleaning agent as the chemical cleaning agent when ΔP1 is larger than ΔP2, or
selecting an acidic chemical cleaning agent as the chemical cleaning agent when ΔP2 is larger than ΔP1,
and using the selected chemical agent to chemically clean the reverse osmosis membrane module or the nanofiltration membrane module,
wherein when the first membrane module array is a reverse osmosis membrane module array, the second membrane module array is a nanofiltration membrane module array; and when the first membrane module array is a nanofiltration membrane module array, the second membrane module array is a reverse osmosis membrane module array.

2. The method of claim 1, wherein the alkaline chemical cleaning agent is one selected from the group consisting of sodium hydroxide (NaOH), potassium hydroxide (KOH), ammonium hydroxide (NH₄OH), and sodium carbonate (Na₂CO₃).

3. The method of claim 1, wherein the acidic chemical cleaning agent is one selected from the group consisting of nitric acid (HNO₃), phosphoric acid (H₂PO₄), hydrochloric acid (HCl), sulfuric acid (H₂SO₄), citric acid, and oxalic acid.

## Patentansprüche

1. Ein Verfahren zur Verwendung eines chemischen Reinigungsmittels zur chemischen Reinigung eines Umkehrosmose-/Nanofiltrations (RO/NF)-Membransystems, das aus zwei Arrays besteht, die ein erstes Umkehrosmose-Membran-Modularray oder ein erstes Nanofiltrations-Membran-Modularray einschließen, das ein Rohwasser behandelt, welches von einer Hochdruckpumpe eingeführt wird, um das Rohwasser in ein erstes produziertes Wasser und ein erstes konzentriertes Wasser zu trennen, und ein zweites Umkehrosmose-Membran-Modularray oder ein zweites Nanofiltrations-Membran-Modularray, das das erste konzentrierte Wasser behandelt, um das erste konzentrierte Wasser in ein zweites produziertes Wasser und ein zweites konzentriertes Wasser zu trennen, wobei das Verfahren Folgendes umfasst:
das Messen von ΔP1, was der Druckunterschied ist zwischen dem Druck des Rohwassers, das dem ersten Umkehrosmose-Membran-Modularray oder dem ersten Nanofiltrations-Membran-Modularray zugeführt wird, und dem Druck des ersten konzentrierten Wassers, das dem zweiten Umkehrosmose-Membran-Modularray oder dem zweiten Nanofiltrations-Membran-Modularray zugeführt wird, und von ΔP2, was der Druckunterschied ist zwischen dem Druck des ersten konzentrierten Wassers, das dem zweiten Umkehrosmose-Membran-Modularray oder dem zweiten Nanofiltrations-Membran-Modularray zugeführt wird, und dem Druck des zweiten konzentrierten Wassers, das von dem zweiten Umkehrosmose-Membran-Modularray oder dem zweiten Nanofiltrations-Membran-Modularray abgelassen wird;
das Vergleichen von ΔP1 und ΔP2, und das Auswählen eines alkalischen chemischen Reinigungsmittels als das chemische Reinigungsmittel, wenn ΔP1 größer ist als ΔP2, oder
das Auswählen eines sauren chemischen Reinigungsmittels als das chemische Reinigungsmittel, wenn ΔP2 größer ist als ΔP1,
und das Verwenden des ausgewählten chemischen Mittels zur chemischen Reinigung des Umkehrosmose-Membran-Moduls oder des Nanofiltrations-Membran-Moduls,
worin das zweite Membran-Modularray ein Nanofiltrations-Membran-Modularray ist, wenn das erste Membran-Modularray ein Umkehrosmose-Membran-Modularray ist; und das zweite Membran-Modularray ein Umkehrosmose-Membran-Modularray ist, wenn das erste Membran-Modularray ein Nanofiltrations-Membran-Modularray ist.

2. Das Verfahren gemäß Anspruch 1, worin das alkalische chemische Reinigungsmittel gewählt ist aus der Gruppe bestehend aus Natriumhydroxid (NaOH), Kaliumhydroxid (KOH), Ammoniumhydroxid (NH₄OH) und Natriumcarbonat (Na₂CO₃).

3. Das Verfahren gemäß Anspruch 1, worin das saure chemische Reinigungsmittel gewählt ist aus der Gruppe bestehend aus Salpetersäure (HNO₃), Phosphorsäure (H₂PO₄), Salzsäure (HCl), Schwefelsäure (H₂SO₄), Zitronensäure und Oxalsäure.

## Revendications

1. Procédé visant à utiliser un agent de nettoyage chimique pour nettoyer par voie chimique un système de membranes OI/NF (osmose inverse et nanofiltration) constitué de deux arrangements, comprenant un premier arrangement de modules membranaires d'osmose inverse ou un premier arrangement de modules membranaires de nanofiltration, qui traite une eau brute introduite par une pompe haute pression pour séparer l'eau brute en une première eau traitée et une première eau concentrée, et un deuxième arrangement de modules membranaires d'osmose inverse ou un deuxième arrangement de modules membranaires de nanofiltration, qui traite la première eau concentrée pour séparer cette première eau concentrée en une deuxième eau traitée et une deuxième eau concentrée, lequel procédé comporte les opérations suivantes :
- déterminer la valeur ΔP1, qui est la différence de pression entre la pression de l'eau brute introduite dans le premier arrangement de modules membranaires d'osmose inverse ou le premier arrangement de modules membranaires de nanofiltration, et la pression de la première eau concentrée introduite dans le deuxième arrangement de modules membranaires d'osmose inverse ou le deuxième arrangement de modules membranaires de nanofiltration, et la valeur ΔP2, qui est la différence de pression entre la pression de la première eau concentrée introduite dans le deuxième arrangement de modules membranaires d'osmose inverse ou le deuxième arrangement de modules membranaires de nanofiltration, et la pression de la deuxième eau concentrée rejetée par le deuxième arrangement de modules membranaires d'osmose inverse ou le deuxième arrangement de modules membranaires de nanofiltration,
- comparer les valeurs ΔP1 et ΔP2, et choisir un agent de nettoyage chimique alcalin comme agent de nettoyage chimique si la valeur ΔP1 est plus grande que la valeur ΔP2, ou choisir un agent de nettoyage chimique acide comme agent de nettoyage chimique si la valeur ΔP2 est plus grande que la valeur ΔP1,
- et utiliser l'agent chimique choisi pour nettoyer par voie chimique le module membranaire d'osmose inverse ou le module membranaire de nanofiltration,
étant entendu que si le premier arrangement de modules membranaires est un arrangement de modules membranaires d'osmose inverse, le deuxième arrangement de modules membranaires est un arrangement de modules membranaires de nanofiltration, et si le premier arrangement de modules membranaires est un arrangement de modules membranaires de nanofiltration, le deuxième arrangement de modules membranaires est un arrangement de modules membranaires d'osmose inverse.

2. Procédé selon la revendication 1, dans lequel l'agent de nettoyage chimique alcalin est un agent choisi dans l'ensemble constitué par de l'hydroxyde de sodium (NaOH), de l'hydroxyde de potassium (KOH), de l'hydroxyde d'ammonium (NH₄OH) et du carbonate de sodium (Na₂CO₃).

3. Procédé selon la revendication 1, dans lequel l'agent de nettoyage chimique acide est un agent choisi dans l'ensemble constitué par de l'acide nitrique (HNO₃), de l'acide phosphorique (H₂PO₄), de l'acide chlorhydrique (HCl), de l'acide sulfurique (H₂SO₄), de l'acide citrique et de l'acide oxalique.
